Europäisches Patentamt

European Patent Office

Office européen des brevets

(11) Veröffentlichungsnummer: **0 222 416**
B1

(12) **EUROPÄISCHE PATENTSCHRIFT** .

(45) Veröffentlichungstag der Patentschrift:
07.02.90

(21) Anmeldenummer: 86115873.1

(22) Anmeldetag: 14.11.86

(51) Int. Cl.⁴: **F16B 19/02**

(54) **Einspannlagerbuchse.**

(30) Priorität: 26.02.86 DE 3606140

(43) Veröffentlichungstag der Anmeldung:
20.05.87 Patentblatt 87/21

(45) Bekanntmachung des Hinweises auf die Patenterteilung:
07.02.90 Patentblatt 90/6

(84) Benannte Vertragsstaaten:
AT BE CH ES FR GB GR IT LI NL SE

(56) Entgegenhaltungen:
DE-A- 2 545 922
DE-A- 2 918 350
DE-C- 1 157 856
DE-U- 1 895 901
DE-U- 7 141 225
GB-A- 2 139 297
US-A- 2 000 452

(73) Patentinhaber: Stetter, Kurt, Dipl.-Ing.,
Gartenstrasse 36, D-7901 Illerrieden(DE)
Patentinhaber: Pentz, Michael, Josef-Henle-Strasse 10,
D-7918 Illertissen(DE)

(72) Erfinder: Stetter, Kurt, Dipl.-Ing., Gartenstrasse 36,
D-7901 Illerrieden(DE)
Erfinder: Pentz, Michael, Josef-Henle-Strasse 10,
D-7918 Illertissen(DE)

(74) Vertreter: Kahler, Kurt, Dipl.-Ing.,
Postfach 248 Gerberstrasse 3, D-8948 Mindelheim(DE)

## Beschreibung

Die Erfindung bezieht sich auf eine Einspannlagerbuchse, bestehend aus einer gerollten, einen Längsschlitz aufweisende Hülse, die aus verschiedenen, insbesondere federnden Materialien bestehen kann.

Solche Einspannlagerbuchsen dienen insbesondere als Lagerbuchsen für Gelenke mit Fest- und Laufsitzen.

Die bekannten Einspannlagerbuchsen sind so ausgeführt, daß ihre Schlitzenden parallel verlaufen und beim Einpressen in die Bohrung der Schlitz nicht geschlossen ist. Die Federkraft, die notwendig ist, um die Buchsen in der Bohrung zu halten, ist durch die Durchmesserveränderung bedingt und ergibt somit deren Sitzfestigkeit. Die Sitzfestigkeit wird von den federelastischen Kräften und der Wandstärke des Materials bestimmt. Hieraus ergibt sich, daß sofern die Federkraft gesteigert werden soll, entsprechend stärkere Bleche verwendet werden müssen. Sowohl die Wandstärke als auch die Durchmesserveränderung beim Einpressen kann nicht beliebig vergrößert werden, weil bei kleinen Durchmessern die Wandstärke eine gewisse Dicke des Materials nicht überschreiten kann, da sonst die Einbaubohrung zuwenig Wandstärke aufweist oder der dazugehörige Bolzen kleiner gehalten werden müßte und somit geschwächt wird. Des weiteren ergibt sich, daß sofern das Material eine gewisse Stärke überschreitet, nicht mehr gerollt werden kann.

Die DE-C 1 157 856 beschreibt einen Schwerspannstift, bei dem versucht wurde, die Spannkraft dadurch zu erhöhen, daß die eine Schlitzkante mit Vorsprüngen versehen ist, die beim Einpressen in gegenüberliegende, durch Ausnehmungen gebildete, deformierbare Stege greifen und eine Art Verzahnung bilden, wobei sich die Vorsprünge selbst nicht deformieren. Durch diese Deformation der Stege konnte aber nur eine begrenzte Erhöhung der Spannkraft erreicht werden. Außerdem ergibt sich auch nur eine federnde, elastische Verbindung, wie sie bei Schwerspannstiften erforderlich ist. Durch die Deformierung der Stege nicht jedoch der Vorsprünge bilden sich zusätzliche Ausbuchtungen nach innen, welche bei einer Einspannlagerbuchse auf Grund der vorgeschriebenen Innentoleranzen nicht erwünscht sind. Auch sind die zusätzlichen Ausnehmungen oder Bohrungen, wie sie bei dem oben angeführten Schwerspannstift angebracht sind, bei Einspannbuchsen ein Nachteil, weil sie bei einer Bewegung der Welle oder des Bolzens diese unerwünscht beschädigen.

Nach DE-A 2 918 350 werden bei einer Einspannlagerbuchse die parallel verlaufenden Schlitzenden als v-förmige Längsschlitze ausgebildet, so daß die spitzen Schlitzkanten sich beim Zusammenpressen berühren und gegeneinander deformieren. Diese Ausführung brachte im Bezug auf die Erhöhung der Einspannkräfte einen gewissen Fortschritt, ist aber mit dem Nachteil verbunden, daß durch die Berührung der Schlitzkanten auf der gesamten Buchsenlänge sehr hohe Einpreßdrücke erforderlich werden, welche insbesondere bei dünnwandigen Gehäusen unerwünschte Formänderungen hervorrufen oder sogar, wie z.B. bei Kettenlaschen mit dünnwandigen Stegen ein Sprengen der Stege mit sich bringen. Ein weiterer großer Nachteil dieser bekannten Einspannlagerbuchse besteht darin, daß ihre Verwendung nur auf Gehäusebohrungen mit sehr engen Toleranzen begrenzt ist, denn das Übermaß der Buchse darf nur so groß sein, daß die spitzen Schlitzkanten sich beim Einpressen berühren und etwas deformieren.

Ist das Übermaß der Gehäusebohrung zu groß, kann es vorkommen, daß nur eine ungenügende oder keine Berührung der Schlitzkanten stattfindet und somit die gewünschte Erhöhung der Einspannkräfte nicht erreicht wird. Ist das Übermaß der Gehäusebohrung zu klein, so steigen die Einpreßkräfte derart an, daß eine Beschädigung der Lochwandung oder eine Deformierung der Gehäusebohrung vorkommen kann.

Der Erfindung liegt die Aufgabe zugrunde, bei einer Einspannlagerbuchse der eingangs genannten Art auf einfache Weise die Einspannkräfte zu erhöhen. Auch soll die Einspannbuchse in Bohrungen mit größeren Toleranzen einen festen Sitz haben.

Die Erfindung besteht darin, daß bei einer einen Längsschlitz, Pfeilschlitz oder Schrägschlitz aufweisenden Hülse entlang mindestens einer Schlitzkante mindestens ein punktförmiger Vorsprung angebracht ist, der während des Einpressens mit der anderen Schlitzkante deformierbar ist. Diese Vorsprünge bilden mit der gegenüberliegenden Schlitzkante eine punktförmige Berührung während des Einpressens der Buchse in eine Gehäusebohrung.

In der Regel werden ein oder mehrere dieser punktförmigen Vorsprünge mit einem gewissen Abstand vom Ende der Buchse angebracht. Dadurch wird beim Eintreiben der Buchse ein konischer Endteil erzeugt, wodurch ein leichteres, einfacheres Einführen der Buchse in die Gehäusebohrung erreicht wird.

Zweckmäßigerweise können die punktförmigen Vorsprünge je nach Länge der Buchse an einer oder mehreren Stellen entlang einer Schlitzkante angebracht werden. Hierbei können die Vorsprünge natürlich auch versetzt oder gegenüberliegend beider Schlitzkanten angebracht sein. In allen Fällen wird die erfindungsgemäße Wirkung erreicht, so z.B. auch, wenn man die punktförmigen Vorsprünge untereinander in verschiedene Größen ausbildet.

Nach einem weiteren Ausführungsbeispiel der Erfindung kann man auch eine oder sogar beide Schlitzkanten gewölbt ausbilden, wodurch ebenfalls die erfindungsgemäßen punktförmigen Vorsprünge gebildet werden, die während des Einpressens deformierbar sind. In allen diesen Fällen werden die erfindungsgemäßen Vorteile gegenüber den bekannten Ausführungen der bekannten Buchsen erreicht.

In der Zeichnung sind Ausführungsbeispiele der Erfindung dargestellt und in der nachfolgenden Beschreibung näher erläutert.

Fig.1 zeigt eine gerollte Einspannbuchse mit einem punktförmigen Vorsprung;

Fig.2 zeigt einen Schnitt der Einspannbuchse nach Fig. 1 längs der Linie A-B;

Fig.3 zeigt eine gerollte Einspannbuchse mit mehreren punktförmigen Vorsprüngen.

Die in der Zeichnung dargestellte erfindungsgemäße Buchse wird in üblicher, herkömmlicher Weise durch Rollen hergestellt (vgl. DIN 1498)

Es sei jedoch darauf hingewiesen, daß neben dem Federstahl 55 S17 nach DIN 17222 bei der Erfindung im Gegensatz zu bekannten Einspannbuchsen auch andere Stähle zum Einsatz kommen können, deren Eigenschaften der gewünschten Lagerung angepaßt werden können.

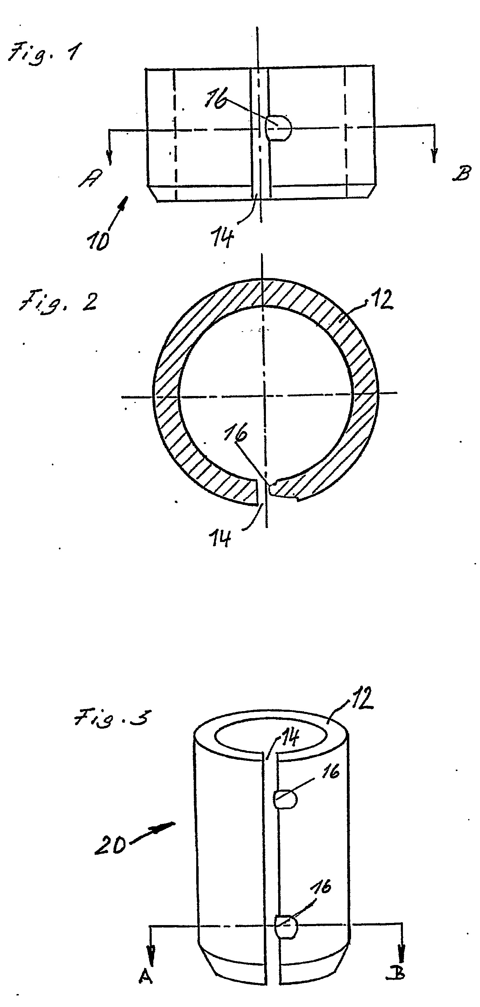

Die Fig. 1 und 2 zeigen eine erste Ausführungsform einer erfindungsgemäßen Einspannbuchse 10 mit einer im wesentlichen zylindrischen Wand 12, die durch einen beim Rollen offengelassenen, im Ausführungsbeispiel senkrechten Schlitz 14 aufgetrennt ist.

Erfindungsgemäß ist nun zumindest an einer Schlitzkante zumindest ein punktförmiger Vorsprung 16 vorgesehen, der sowohl vor als auch nach dem Rollen bevorzugt durch vertiefendes Einpressen (vgl. Fig. 2) angebracht werden kann. Bevorzugt befinden sich die punktförmigen Vorsprünge in einem gewissen Abstand von den Enden der Buchsen.

Fig. 2 zeigt eine weitere Ausführungsform einer erfindungsgemäßen Einspannbuchse 20 mit zwei punktförmigen Vorsprüngen 16. Wie bereits erwähnt können die punktförmigen Vorsprünge 16 auch an beiden Schlitzkanten entweder gegenüberliegend oder versetzt zueinander angebracht sein.

Wie eingangs erwähnt, muß beim Einsetzen der bekannten Einspannbuchsen darauf geachtet werden, daß die Bohrung nicht zu eng ist (das heißt, daß sehr enge Toleranzen einzuhalten sind), da bei Berührung der Schlitzkanten auf der gesamten Buchsenlänge sehr hohe Einpressdrücke erforderlich wären, die zu Formveränderungen führen können.

Beim Einsetzen der erfindungsgemäßen Einspannbuchsen erfolgt lediglich eine Deformierung der punktförmigen Vorsprünge 16 mit der gegenüberliegenden Schlitzkante, so daß auch bei größeren Toleranzen der Bohrung eine hohe Einspannkraft erzielt wird, denn es bewirkt die mehr oder weniger punktförmige Anlage der beiden Schlitzkanten unter Deformierung eine erhebliche zusätzliche Federkraft in tangentialer Richtung, die die gewünschte radiale Einspannkraft wesentlich erhöht. Zahlreiche Versuche haben ergeben, daß sich mit der erfindungsgemäßen Einspannbuchse Einspannkräfte erreichen lassen, die ein mehrfaches der Einspannkräfte bekannter Einspannbuchsen betragen.

Es sei noch daraufhingewiesen, daß die punktförmigen Vorsprünge bevorzugt derart angebracht werden, daß sie bei einer Deformierung an der anderen Schlitzkante nicht in das Innere der Buchse ragen. Erfindungsgemäß kann dies dadurch erreicht werden, daß die punktförmigen Vorsprünge in Fig. 2 von außen in die Schlitzkante eingedrückt werden, so daß sich eine Rundung in gewissen Abstand von der Innenfläche der Wand 12 ergibt, wie dies aus Fig. 2 deutlich ersichtlich ist.

## Patentansprüche

1. Einspannlagerbuchse (10) für Gleitlager aus einer insbesondere gerollten, einen Längsschlitz aufweisenden Hülse, dadurch gekennzeichnet, daß entlang zumindest einer Schlitzkante zumindest ein punktförmiger Vorsprung (16) angebracht ist, der während des Einpressens der Einspannlagerbuchse in eine zugehörige Bohrung mit der gegenüberliegenden Schlitzkante deformierbar in Eingriff geht.

2. Einspannlagerbuchse nach Anspruch 1, dadurch gekennzeichnet, daß mehrere punktförmige Vorsprünge (16) entlang einer Schlitzkante angebracht sind.

3. Einspannlagerbuchse nach Anspruch 1, dadurch gekennzeichnet, daß punktförmige Vorsprünge (16) entlang beider Schlitzkanten versetzt angebracht sind.

4. Einspannlagerbuchse nach Anspruch 1, dadurch gekennzeichnet, daß punktförmige Vorsprünge (16) entlang beider Schlitzkanten gegenüberliegend angebracht sind.

5. Einspannlagerbuchse nach einem der vorhergehenden Ansprüche, dadurch gekennzeichnet, daß die punktförmigen Vorsprünge (16) voneinander verschiedene Größen aufweisen.

6. Einspannlagerbuchse nach einem der vorhergehenden Ansprüche, dadurch gekennzeichnet, daß die punktförmigen Vorsprünge (16) derart angebracht bzw. konisch ausgebildet sind, daß nach dem Einpressen der Einspannbuchse (10) in eine zugehörige Bohrung im wesentlichen kein deformiertes Material in das Innere der Hülse (12) übersteht.

7. Einspannlagerbuchse nach Anspruch 6, dadurch gekennzeichnet, daß die punktförmigen Vorsprünge (16) durch punktförmiges Pressen oder Stanzen an der äußeren Schlitzkante ausgebildet sind.

## Claims

1. Tension bearing bush (10) for sliding bearings formed of a preferably rolled sleeve provided with a longitudinal slot, characterized in that along at least one slot face at least one pointlike projection (16) is formed deformably engaging the opposite slot face upon pressing of the tension bearing bush into an associated bore.

2. Tension bearing bush of claim 1, wherein several pointlike projections (16) are arranged along one slot face.

3. Tension bearing bush of claim 1, wherein pointlike projections (16) are arranged offset to each other along both slot faces.

4. Tension bearing bush of claim 1, wherein pointlike projections (16) are arranged in opposition to each other along both slot faces.

5. Tension bearing bush of any of the preceding claims, wherein the pointlike projections (16) have sizes differing from each other.

6. Tension bearing bush of any of the preceding claims, wherein the pointlike projections (16) are provided or conically formed such that upon pressing the tension bush (10) in an associated bore essentially no deformed material projects into the interior of the sleeve (12).

7. Tension bearing bush of claim 6, wherein the pointlike projections (16) are formed by pointlike pressing or embossing at an outer edge of said slot.

## Revendications

1. Douille d'encastrement (10) pour palier lisse, consistant en manchon roulé, à fente longitudinale, caractérisée par l'exécution d'une saillie ponctuelle (16) sur la longueur de la fente (une saillie minimum) devant être déformable pour permettre d'engrener sur la fente opposée lors de l'emmanchement de la douille d'encastrement pour palier dans l'alésage prévu.

2. Douille d'encastrement pour palier lisse selon revendication caractérisée par l'exécution de plusieurs saillies ponctuelles (16) sur une longueur de la fente longitudinale.

3. Douille d'encastrement pour palier lisse selon revendication 1, caractérisée par l'exécution en quinconce des saillies ponctuelles (16) sur la longueur des deux fentes longitudinales.

4. Douille d'encastrement pour palier lisse selon revendication 1, caractérisée par l'exécution de saillies ponctuelles placées (16) en opposition sur la longueur des deux fentes longitudinales.

5. Douille d'encastrement pour palier lisse selon revendications précédentes, caractérisée par l'exécution de saillies ponctuelles (16) de dimensions différentes.

6. Douille d'encastrement pour palier lisse, selon l'une des revendications précédentes, caractérisée par le fait que les saillies ponctuelles (16) soient exécutées de telle façon (respectivement coniques) pour, qu'après emmanchement de la pièce (10) dans le logement correspondant, aucune déformation du matériel ne puisse apparaître à l'intérieur de la douille (12).

7. Douille d'encastrement pour palier lisse, selon revendication 6, caractérisée par le fait que les saillies ponctuelles (16) soient exécutées par pressage ou par estampage sur l'arrête extérieure de la fente longitudinale.

Fig. 1

Fig. 2

Fig. 3